# EUROPEAN PATENT APPLICATION

(11) **EP 2 426 756 A1**
(43) Date of publication of application: **07.03.2012**
(21) Application number: 11179751.0
(22) Date of filing: 01.09.2011
(51) Int. Cl.: H01M 2/10, H01M 2/20

(54) **Tool batteries**

(30) Priority: 02.09.2010 JP 2010196553
(71) Applicant: Makita Corporation, Anjo, Aichi 446-8502 (JP)
(72) Inventor: Ogura, Hironori, Anjo, Aichi 446-8502 (JP)
(74) Representative: Kramer - Barske - Schmidtchen

(57) **Abstract**

A tool battery (10) includes a plurality of battery cells (C) and a holder device (30). The holder device (30) includes a pair of holder members (32) and a plurality of lead plates (36, 37) mounted to each of the holder members (32). Each of the holder members (32) has fitting portions (34) for fitting with end portions of the battery cells (C). The lead plates (36, 37) are electrically connected to the corresponding electrodes (P, N) of the battery cells (C).

## Description

This application claims priority to Japanese patent application serial number 2010-196553, the contents of which are incorporated herein by reference.

The present invention relates to batteries for power tools, and in particular to batteries having battery cells stored within a battery housing.

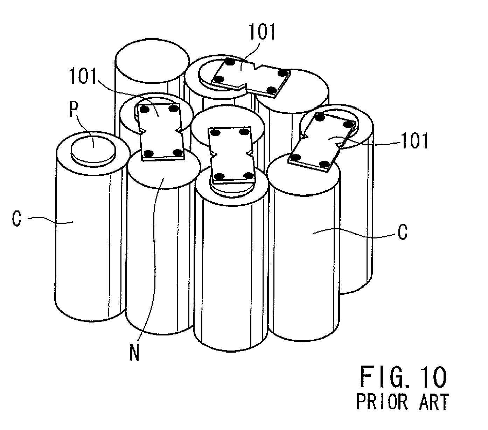

A known battery for a power tool is disclosed, for example, in Japanese Laid-Open Patent Publication No. 2002-124306. As shown in FIG 10, a battery disclosed in this publication includes a plurality of cylindrical battery cells C (ten battery cells C are shown in FIG. 10) that are inserted into an internal case (not shown) and are stored within a battery housing (not shown) together with a base plate or the like in the state that positive and negative electrodes P and N of the adjacent battery cells C are connected with each other by lead plates 101. Each of the lead plate 101 is connected to the corresponding electrodes P and N of the adjacent battery cells C by spot welding.

However, for example, if water droplets are produced due to condensation within the battery housing and enter the internal case, it may be possible that the water reaches the electrodes P and N after flowing along the outer circumferential surfaces of the battery cells C. In particular, if the water adheres to the positive electrodes P and regions (negative regions) surrounding the electrodes P, it may be possible to cause electric leakage or earlier corrosion.

Therefore, there is a need in the art for a battery in which battery cells are prevented or inhibited from adhesion of water to electrodes positioned at their end surfaces.

According to the present teaching, a tool battery includes a plurality of battery cells and a holder device. The holder device includes a pair of holder members and a plurality of lead plates mounted to each of the holder members. Each of the holder members has fitting portions for fitting with end portions of the battery cells. The lead plates are electrically connected to the corresponding electrodes of the battery cells.

Additional objects, features, and advantages, of the present invention will be readily understood after reading the following detailed description together with the claims and the accompanying drawings, in which:
FIG 1 is a perspective view showing a battery for a power tool according to a first example;
FIG 2 is an exploded perspective view of the battery;
FIG 3 is an exploded perspective view showing battery cells and holder devices of the battery;
FIG 4 is a perspective view showing the battery cells held between the holder devices from opposite sides;
FIG 5 is a perspective view of the holder device;
FIG 6 is a perspective view showing a holder member and lead plates embedded into the holder member;
FIG 7 is an exploded perspective view showing the holder member and the lead plates;
FIG 8 is a sectional view taken along line VIII-VIII in FIG 4;
FIG 9(A) is an enlarged view of a portion IX in FIG 8;
FIG 9(B) is an enlarged view showing an alternative example of the lead plate; and
FIG 10 is a perspective view showing battery cells and lead plates of a known battery.

Each of the additional features and teachings disclosed above and below may be utilized separately or in conjunction with other features and teachings to provide improved batteries for power tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

In one example, a tool battery includes a battery housing, a plurality of battery cells and a holder device. The battery cells are disposed within the battery housing. Each of the battery cells has a first end portion and a second end portion opposite to the first end portion. Each of the first and second end portions includes an end surface and an electrode provided at the end surface. The holder device is configured to hold the first and second end portions of the battery cells in such a manner that the end surfaces of the first end portions of the battery cells are aligned with each other and the end surfaces of the second end portions of the battery cells are aligned with each other. The holder device includes a first holder member, a second holder member, a plurality of first lead plates and a plurality of second lead plates. The first holder member has a plurality of recesses for fitting with the first end portions of the battery cells. The second holder member has a plurality of recesses for fitting with the second end portions of the battery cells. The first lead plates are electrically connected to the electrodes provided at the end surfaces of the first end portions of the battery cells. The first lead plates are embedded into the first holder member so as to be exposed at bottoms of the recesses of the first holder member. The second lead plates are electrically connected to the electrodes provided at the end surfaces of the second end portions of the battery cells. The second lead plates are embedded into the second holder member so as to be exposed at bottoms of the recesses of the second holder member.

The first end portions of the battery cells are fitted with the corresponding recesses of the first holder member. Therefore, the first holder member and the first lead plates can cover the electrodes provided at the first end portions of the battery cells. Similarly, the second end portions of the battery cells are fitted with the corresponding recesses of the second holder member. Therefore, the electrodes provided at the second end portions of the battery cells can be covered by the second holder member and the second lead plates. Therefore, even in the event that water condensed within the battery cells is adhered to the battery cells and flows along the outer circumferential surfaces of the battery cells, the electrodes or portions around the electrodes may be prevented or inhibited from adhesion of water. As a result, it is possible to prevent potential electric leakage from the electrodes and corrosion of the electrodes and portions around the electrodes.

Each of the first and second holder members may be made of resilient material. The resin holder members may seal the end portions of the battery cells in the state that the end portions of the battery cells are fitted with the corresponding recesses of the first and second holder members.

Each of the first and second holder members may further include a plurality of openings formed on the side opposite to the side formed with the recesses. The openings of the first holder member and the openings of the second holder member are positioned coaxially with the electrodes of the first and second end portions of the battery cells, respectively. With this arrangement, the openings can be used for welding the first and second lead plates to the corresponding electrodes of the battery cells.

The openings may have a diameter substantially equal to a diameter of positive electrodes of the electrodes of the battery cells. With this arrangement, it is possible to set the openings to have a minimum size necessary for welding the first and second lead plates.

The openings of each of the first and second holder members are filled with resin in the state that the first and second lead plates are welded to the corresponding electrodes of the battery cells at positions of the openings. With this arrangement, it is possible to prevent water from adhering to the weld portions of the first and second lead plates. Therefore, it is possible to prevent the weld portions from corrosion caused by water.

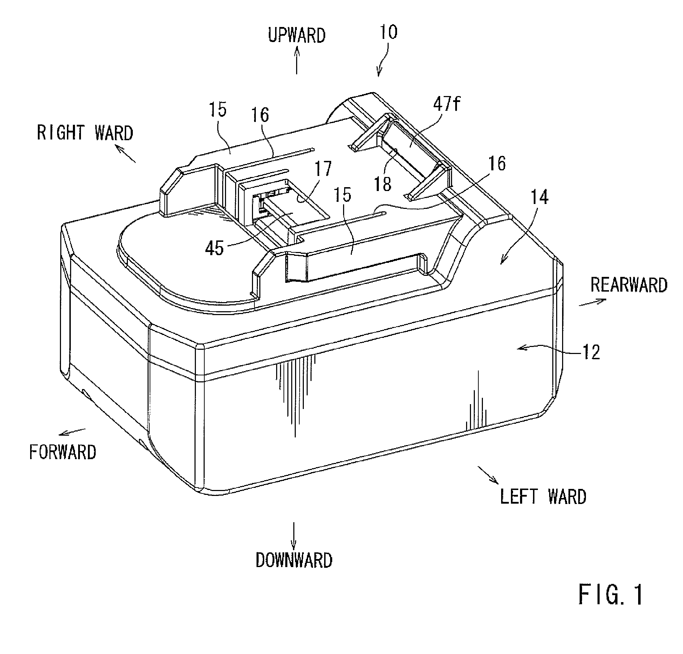

A first example will now be described with reference to FIGS. 1 to 9(A). In these figures, "forward", "rearward", "leftward", "rightward", "upward" and "downward" indicate directions with respect to a tool battery.

### <General Construction of Battery>

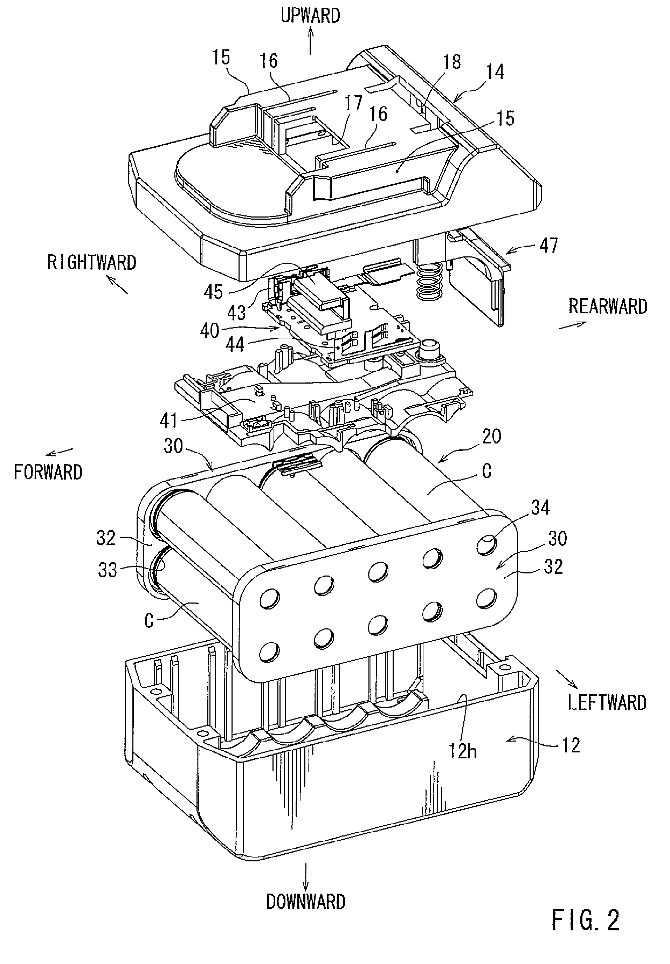

Referring to FIGS. 1 and 2, a battery 10 for a power tool (not shown) generally includes a plurality of cylindrical battery cells C (ten battery cells C are provided in this example), a housing body 12 having a top opening 12h (see FIG 2), and a lid 14 for closing the top opening 12h of the body housing 12. The housing body 12 and the lid 14 have a substantially rectangular configuration in plan view. The lid 14 is detachably mounted to the housing body 12 by means of screws (not shown) that are screwed at eight positions along the periphery of the lid 14. The housing body 12 and the lid 14 constitute a battery housing.

As shown in FIG 2, the battery cells C are assembled as a cell assembly 20 and are stored within the housing body 12. In the cell assembly 20, two rows of five parallel battery cells C are tiered in the vertical direction, while the axes of the battery cells C in each row being oriented in the left and right direction. Right and left holder devices 30 support the left end portions and the right end portions of the battery cells C, respectively. A base plate 40 is supported on the cell assembly 10 with the intervention of an electrical insulation plate 41. A positive electrode 43, a negative electrode 44, a connector 45, etc. are mounted on the base plate 40.

As shown in FIGS. 1 and 2, a pair of slide rails 15 are formed on the upper surface of the lid 14 at positions on opposite sides with respect to the left and right direction and extend in the forward and rearward direction. The slide rails 15 serve as a connection device for connection with a tool body of a power tool (not shown). A pair of left and right guide slits 16 are formed in the central region of the upper surface of the lid 14 positioned between the slide rails 15. Plate-like terminals (not shown) of the tool body can be inserted into the guide slits 16 from the front side. The positive terminal 43 and the negative terminal 44 are positioned on the backside of the lid 14 so as to be vertically opposed to the right and left guide slits 16, respectively. A connector opening 17 is formed in the upper surface of the lid 14 at a position between the left and right guide slits 16. The connector 45 mounted to the base plate 40 protrudes upwardly from the lid 14 through the connector opening 17 and has an upper portion oriented forwardly.

As shown in FIG. 2, a hook opening 18 having a substantially U-shape in plan view is formed in the rear end of the upper surface of the lid 14. As shown in FIG 1, a lock claw 47f of a hook 47 protrudes upwardly from the lid 14 through the hook opening 18. The hook 47 is positioned within a rear end of the battery housing (constituted by the housing body 12 and the lid 14) and is biased by a spring (not shown) to protrude upward through the hook opening 18.

### <Holder Devices of Cell Assembly>

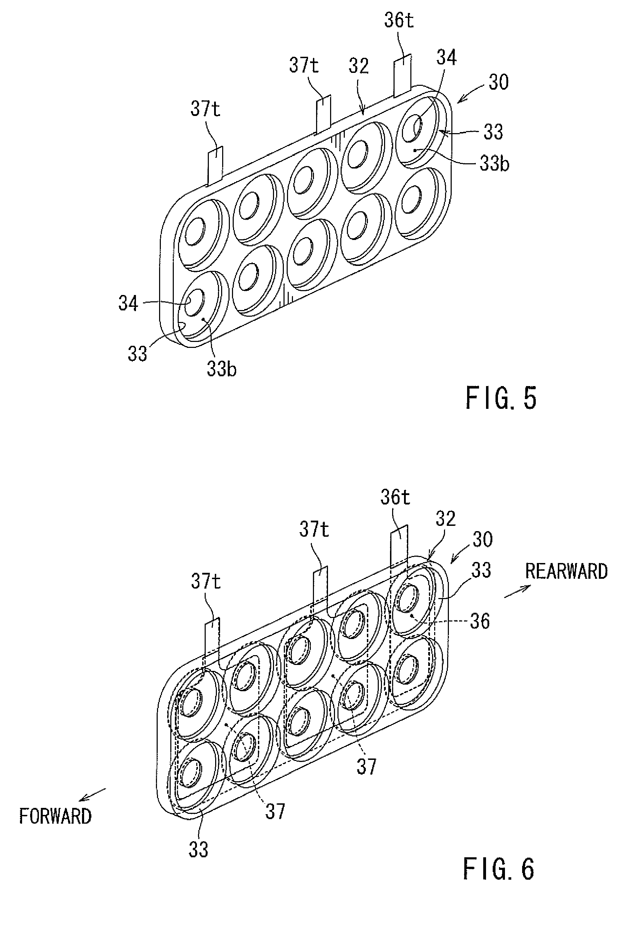

The holder devices 30 serve to hold the battery cells C in the state that the battery cells C are two-tiered in the vertical direction. The holder devices 30 also serve to electrically connect each two battery cells of the battery cells C in parallel to each other and to electrically connect five sets of two battery cells (connected parallel to each other) in series with each other. As shown in FIG 6, each of the holder devices 30 includes a holder member 32, an end lead plate 36 and intermediate lead plates 37. The holder member 32 is made of electrically insulation material. The end lead plate 36 and the intermediate lead plates 37 are made of electrically conductive material and are mounted to the holder member 32. More specifically, the lead plates 36 and 37 are embedded into the holder member 32 so as to be integrated with the holder member 32. The lead plates 36 and 37 are connected to the positive and negative electrodes P and N of the battery cells C as will be explained later.

The holder member 32 has a rectangular configuration. In this example, the holder member 32 is made of a rubber plate having a thick thickness, so that the holder member 32 has resiliency in addition to the electrically insulation property. As shown in FIG 5, five pairs of circular recesses 33 each including two vertically aligned recesses 33 are formed in the inner side surface of the holder member 32 and are spaced equally from each other in the forward and rearward direction. In this specification, the term "inner side surface" used for the holder member 32 means the surface opposed to the end portions of the battery cells C, and the term "outer side surface" used for the holder member 32 means the surface opposite to the inner side surface. Each of the circular recesses 33 is configured to be fitted with the end portion of the battery cell C. More specifically, the inner diameter of the circular recess 33 is set to be substantially equal to the outer diameter of the battery cell C. In addition, the depth of the circular recess 33 is set to be sufficient to entirely cover the end portion (i.e., a portion having the electrode P or N) of the battery cell C.

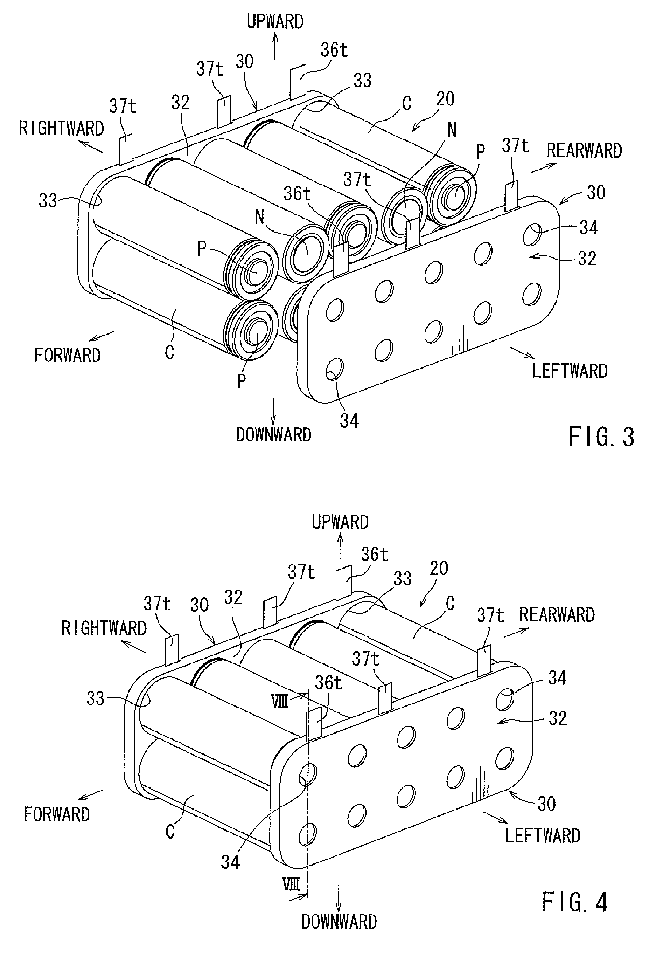

As shown in FIGS. 3 and 4, circular openings 34 are formed in the outer side surface of the holder member 32 so as to be coaxial with the circular recesses 33, respectively. The openings 34 have a diameter substantially equal to the outer diameter of the positive electrodes P of the battery cells C. As shown in FIG 5, each of the openings 34 communicates with a bottom 33b of the corresponding circular recess 33, so that the openings 34 extend through the thickness of the holder member 32.

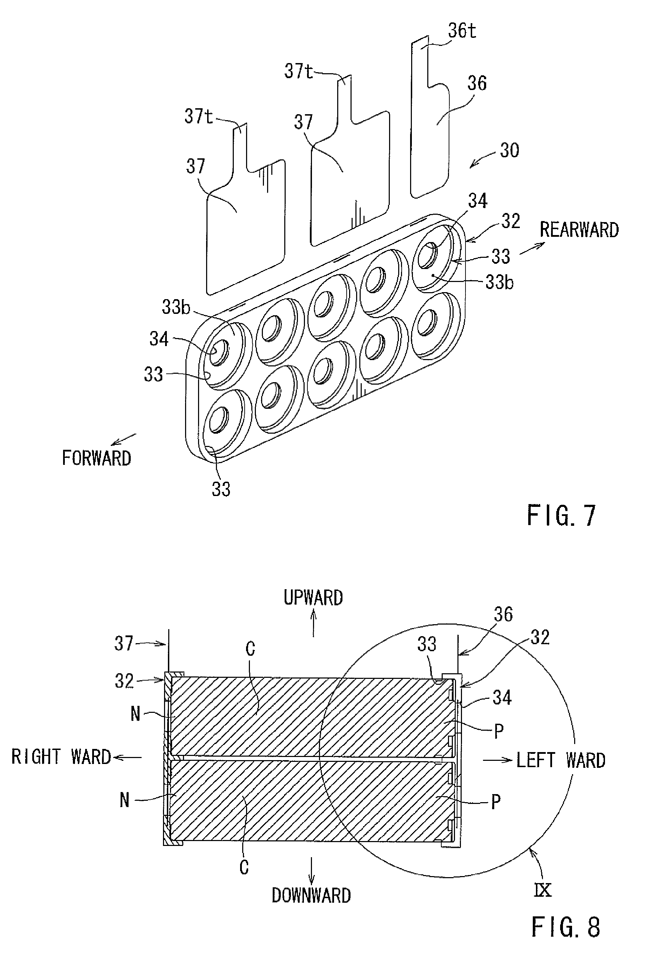

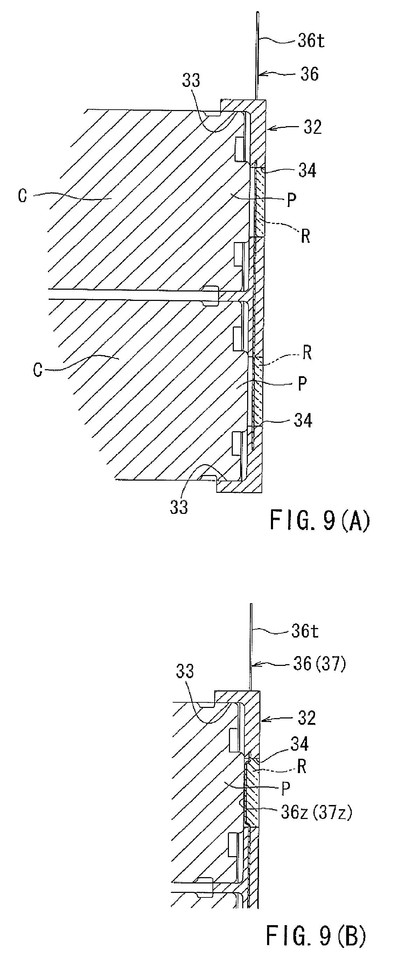

As shown in FIG. 6, in this example, two intermediate lead plates 37 and one end lead plate 36 are embedded into the holder member 32 so as to extend parallel to the inner and outer side surfaces of the holder member 32. Each of the intermediate lead plates 37 has a rectangular plate-like configuration with a relatively large width, so that the electrodes P and N of two adjacent ones of the battery cells C positioned at the upper stage and the electrodes P and N of two adjacent ones of the battery cells C positioned at the lower stage can contact the four corner portions of the relevant lead plate 37. The end lead plate 36 has a strip-like configuration with a relatively narrow width, so that the electrode P (or N) of one of the battery cells C positioned at the upper stage and the electrode N (or P) of one of the battery cells C positioned at the lower stage contact the upper portion and the lower portion of the end lead plate 36, respectively. Each of the intermediate lead plates 37 has a terminal portion 37t protruding upward from the upper end surface of the holder member 32. Similarly, the end lead plate 36 has a terminal portion 36t protruding upward from the upper end surface of the holder member 32. As shown in FIGS. 8 and 9(A), each of the intermediate lead plates 37 and the end lead plate 36 is positioned to extend across the openings 34 of the holder member 32. Therefore, the intermediate lead plates 37 and the end lead plate 36 are exposed at the bottoms 33b of the circular recesses 33 as viewed from the inner side and are exposed at the openings 34 as viewed from the outer side. Therefore, in the state that the end portions of the battery cells C are fitted into the circular recesses 33 of the holder member 32, the intermediate lead plates 37 and the end lead plate 36 can be spot-welded to the corresponding electrodes P or N of the battery cells C from the outer side of the holder member 32 by utilizing the openings 34.

FIG. 9(B) shows an alternative arrangement in which a spot-welded portion 36z of the intermediate lead plate 36 or a spot-welded portion 37z of the end lead plate 37 is bent to have a configuration like a hat and protrudes toward the corresponding positive electrode P (or negative electrode N). With this arrangement, it is possible to inhibit deflection of the intermediate lead plate 36 or the end lead plate 37 during the welding operation.

As shown in FIGS. 6 and 7, in the right holder device 30, the intermediate lead plates 37 are positioned on the front side, while the end lead plate 36 is positioned on the rear side. On the other hand, as shown in FIGS. 3 and 4, in the left holder device 30, the end lead plate 36 is positioned on the front side, while the intermediate lead plates 37 are positioned on the rear side. With this arrangement, it is possible to connect each two of the ten battery cells C in parallel to each other and to electrically connect five sets of battery cells C (each including two battery cells connected parallel to each other) in series with each other.

The terminal portions 36t of the end lead plates 36 and the terminal portion 37t of the intermediate lead plates 37 of each holder device 30 of the cell assembly 20 are electrically connected to the corresponding terminals mounted to the base plate 40.

The holder member 32 may be molded to have a given shape by an injection molding process of rubber into a molding die (not shown). Prior to the molding operation of the holder member 32, the end lead plate 36 and the intermediate lead plates 37 are set at given positions within the molding die, so that the end lead plate 36 and the intermediate lead plates 37 can be embedded into the holder member 32 during the molding process of the holder member 32.

As shown in FIG. 9(A), the openings 34 of the holder member 32 may preferably be filled with resin adhesive R after the spot-welding operation, so that is possible to ensure a waterproof property of the holder device 30.

### <Advantages of Tool Battery>

According to the tool battery 10 of the above example, the end portions of the battery cells C are fitted into the corresponding circular recesses 33 of the holder members 32 of the holder devices 30. Therefore, the electrodes P and N at the end portions of the battery cells C can be covered by the holder members 32 and the lead plates 36 and 37. Hence, even in the event that water is adhered to the battery cells C due to condensation within the battery housing and flows along the outer surfaces of the battery cells C, the water may not reach the electrodes P and N.

As a result, it is possible to prevent or inhibit electric leakage at the electrodes and corrosion of the electrodes and portions around the electrodes.

Further, because the holder members 32 are made of rubber, the end portions of the battery cells C can be sealed due to fitting of the end portions of the battery cells C into the circular recesses 33 of the holder members 32.

Furthermore, each of the holder members 32 has the openings 34, from which the lead plates 36 and 37 are exposed, on the side opposite to the outer side surface formed with the circular recesses 33. Therefore, the welding operations of the lead plates 36 and 37 to the corresponding electrodes P and N can be easily performed in the state that the end portions of the battery cells C are fitted into the circular recesses 33.

Furthermore, because the diameter of the openings 34 is set to be substantially equal to the diameter of the positive electrodes P of the battery cells C, it is possible to set the diameter of the openings 34 to have a minimum size necessary for the welding operations.

Furthermore, by closing the openings 34 by the resin adhesive R after the lead plates 36 and 37 have been welded to the corresponding electrodes P and N at the openings 34, it is possible to reliably prevent water from adhering to the welded portions of the lead plates 36 and 37. Therefore, it is possible to prevent corrosion of the welded portions.

### <Possible Modifications>

The above example may be modified in various ways. For example, although the holder member 32 of each holder device 30 is formed of a thick rubber plate in the above example, the holder member 32 may be formed of a resin plate having no resiliency. In such a case, it may be preferable to provide seal rings on the inner circumferential side of each circular recess 33 of the holder member 32.

Further, the resin adhesive R used for closing the openings 34 after welding the lead plates 36 and 37 to the electrodes P and N of the battery cells C may be replaced with waterproof tapes or other suitable waterproof members for closing the openings 34.

Further, although two separate holder devices 30 each having the holder member 32 are used in the above example, the holder members 32 may be connected to each other to form a single holder device.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A tool battery (10) comprising:
a plurality of battery cells (C) each having a first end portion and a second end portion opposite to the first end portion, each of the first and second end portions including an electrode (P, N); and
a holder device (30) including:
a first holder member (32) configured to hold the first end portions of the battery cells (C) and having fitting portions (33) for fitting with the first end portions;
a second holder member (32) configured to hold the second end portions of the battery cells (C) and having fitting portions (33) for fitting with the second end portions;
a plurality of first lead plates (36, 37) mounted to the first holder member (32) and electrically connected to the electrodes (P, N) of the first end portions of the battery cells (C); and
a plurality of second lead plates (36, 37) mounted to the second holder member (32) and electrically connected to the electrodes (P, N) of the first end portions of the battery cells (C).

2. The tool battery (10) as in claim 1, wherein each of the first and second holder members (32) sealingly contacts the corresponding end portions of the battery cells (C) at positions around the electrodes (P, N).

3. The tool battery (10) as in claim 1 or 2, wherein the first lead plates (36, 37) are integrated with the first holder member (32), and the second lead plates (36, 37) are integrated with the second holder member (32).

4. The tool battery (10) as in any one of claims 1 to 3, wherein the first lead plates (36, 37) are embedded into the first holder member (32) and are exposed from the first holder member (32) at positions opposed to the electrodes (P, N) of the first end portions of the battery cells (C), and the second lead plates (36, 37) are embedded into the second holder member (32) and are exposed from the second holder member (32) at positions opposed to the electrodes (P, N) of the second end portions of the battery cells (C),

5. The tool battery (10) as in any one of claims 1 to 4, wherein the fitting portions of each of the first and second holder members (32) comprise recesses (33) formed at positions opposed to the electrodes (P, N) of the corresponding end portions of the battery cells (C).

6. The tool battery (10) as in claim 5, wherein the first and second lead plates (36, 37) are exposed at bottoms (33b) of the recesses (33) of the first and second holder members (32), respectively.

7. The tool battery (10) as in claim 5 or 6, wherein each of the first and second holder members (32) further includes a plurality of openings (34) formed on the side opposite to the side formed with the recesses (33), wherein the openings (34) are positioned coaxially with the electrodes (P, N) of the corresponding end portions of the battery cells (C) fitted into the recesses (33), respectively.

8. The tool battery (10) as in claim 7, wherein the openings (34) have a diameter substantially equal to a diameter of positive electrodes (P) of the electrodes (P, N) of the battery cells (C).

9. The tool battery (10) as in claim 7 or 8, wherein the openings (34) are filled with resin (R) in the state that the first and second lead plates (36, 37) are welded to the corresponding electrodes (P, N) of the battery cells (C) at positions of the openings (34).

10. The tool battery (10) as in any one of the preceding claims, wherein each of the first and second holder members (32) is made of electrically insulation material.

11. The tool battery (10) as in any one of the preceding claims, wherein each of the first and second holder members (32) is resiliently deformable.

12. The tool battery (10) as in any one of the preceding claims, further comprising a battery housing (12, 14), wherein the battery cells (C) held by the holder device (30) are disposed within the battery housing (12, 14).

13. A tool battery (10) comprising:
a plurality of battery cells (C) each having a first end and a second end opposite to the first end, each of the first and second ends having an electrode (P, N); and
a holder device (30) configured to hold the battery cells (C) and including a pair of holder members (32) and a plurality of lead plates (36, 37) mounted to each of the holder members (32), wherein:
one of the holder members (32) is configured to cover the first end portions of the battery cells (C) except for the electrodes (P, N);
the other of the holder members (32) is configured to cover the second end portions of the battery cells (C) except for the electrodes (P, N); and
the lead plates (36, 37) are electrically connected to the corresponding electrodes (P, N) of the battery cells (C).

14. The tool battery (10) as in claim 13, wherein each of the holder members (32) sealingly contacts the corresponding end portions of the battery cells (C).
